# EUROPEAN PATENT SPECIFICATION

(11) **EP 3 156 219 B1**
(45) Date of publication and mention of the grant of the patent: **26.04.2023**
(21) Application number: 16189580.0
(22) Date of filing: 20.09.2016
(51) Int. Cl.: B31D 1/02, B65H 29/00, B65H 29/54, B65H 29/66

(54) **MANUFACTURING DEVICE OF LAMINATED LABEL BODY**
HERSTELLUNGSVORRICHTUNG VON LAMINIERTEN ETIKETTENKÖRPERN
DISPOSITIF DE FABRICATION DE CORPS D'ÉTIQUETTE STRATIFIÉ

(30) Priority: 24.09.2015 JP 2015186327
(43) Date of publication of application: 19.04.2017
(73) Proprietor: Miyakoshi Printing Machinery Co., Ltd., Narashino-shi, Chiba 275-0016 (JP); Nishikawa Communications Co. Ltd., Aichi 464-0852 (JP)
(72) Inventor: TOMAKI, Hitoshi, Daisen-city, Akita 019-1605 (JP); SAGA, Toshihiro, Daisen-city, Akita 019-1605 (JP); FUJIWARA, Reishi, Narashino-shi, Chiba 275-0016 (JP); FUJIKAWA, Mitsuru, Nagoya-shi, Chiba 464-0852 (JP)
(74) Representative: Office Freylinger

(56) References cited:
- JP-A- 2001 240 029
- JP-A- 2011 240 654
- JP-A- 2012 206 335
- US-A1- 2006 263 594
- US-B1- 6 280 549

## Description

### BACKGROUND OF THE INVENTION

### Field of the Invention

The present invention relates to a device for manufacturing a laminated label body without using a release paper, in which multiple labels are laminated in a form of steps.

### Related Background of the Invention

Japanese Patent Laid-Open No. 2012-206335 discloses a manufacturing device of first and second continuous label bodies.

The manufacturing device of the first continuous label body includes a label feeding portion for feeding a rolled release paper to which multiple labels are stuck, a peeling portion for peeling off the label from the release paper supplied from the label feeding portion, a guide portion for guiding the peeled-off label to another release paper different from the release paper to which the label is stuck, and another peeling portion for peeling off the label from another release paper.

That is, the label is printed on a surface of a label base material, a peeling layer is formed so as to cover its printed surface, and an adhesive layer is formed on a back surface of the label base material. The label is stuck to the release paper by causing the adhesive layer to adhere to the release paper.

Then, the first label peeled off first at the peeling portion is fed onto another release paper by the guide portion, and the adhesive layer of the label base material of the label is adhered to another release paper. After that, the first label is conveyed together with another release paper.

Next, the subsequent label peeled off from the release paper in the peeling portion has a part of the adhesive layer of the subsequent label laminated on the peeling layer of the first label and stuck thereto, and the other part of the adhesive layer of the subsequent label is stuck to another release paper. Multiple labels are sequentially laminated in a series continuously on another release paper by sequentially performing this operation.

A continuous label body (laminated label body) without using the release paper in which the multiple labels continue in a series is formed by peeling off the laminated multiple labels from another release paper by the peeling portion.

The manufacturing device of the second continuous label body is a manufacturing device of a continuous label body using an endless belt member without using another release paper in the manufacturing device of the first continuous label body.

The manufacturing device of laminates labels peeled off from the release paper on the endless belt member so that multiple labels continue without interruption, and forms a continuous label body (laminated label body ) without using a release paper in which multiple labels continue without interruption by peeling off the multiple labels from the endless belt member.

Since the manufacturing device of a first continuous label body uses another release paper and another peeling portion different from ones which are used in the manufacturing device of the first continuous labels strip, it is complicated in configuration and is expensive.

Furthermore, a space for installing another release paper and another peeling portion is needed, and the installation space becomes larger.

The second continuous label body uses the endless belt member, and thus the configuration is complicated and expensive.

Moreover, a space for installing the endless belt member is needed, and the installation space becomes larger.

Document JP 2011 240654 A shows a further device for manufacturing a laminated label body comprising a lamination pull roll and a guide roll being rotatably pressed against the lamination pull roll, which pull roll is rotated intermittently, namely in a rotation phase by a predetermined angle followed by a stop phase, wherein during the stop phase of the pull roll, the adhesive sheet is supplied on the upper peripheral surface of the pull roll.

The present invention has been made in view of the aforementioned prior-art problems and has an object to provide a manufacturing device of a laminated label body which can manufacture a laminated label body without using a release paper, with simple and space-saving configuration.

### SUMMARY OF THE INVENTION

The present invention is a manufacturing device of a laminated label body comprising the features of independent claim 1. The manufacturing device including: a paper feeding portion for conveying a release paper to which a label is stuck at a first conveying speed; a winding portion for winding the release paper conveyed at the first conveying speed; a peeling device for peeling off the label from the release paper conveyed at the first conveying speed; and a lamination device for conveying the label peeled off from the release paper conveyed at the first conveying speed at a second conveying speed and for manufacturing a laminated label body ,with a preceding label and a subsequent label being laminated with each other by overlapping and adhering them, and for conveying said laminated label body, wherein the lamination device includes a lamination pull roll rotationally driven and a guide roll rotatably pressed against the lamination pull roll, a circumferential surface of said lamination pull roll is constructed to prevent adhesion of said label peeled off by said peeling device, and a tip end portion of said label peeled off in said peeling device is fed into an area for applying rotational pressure between said lamination pull roll and said guide roll while being in contact with the circumferential surface of said guide roll, and the second conveying speed is slower than the first conveying speed, so that a rear end portion of the preceding label and a tip end of the subsequent label are adhered to each other in an overlapped state to be laminated.

In the manufacturing device of the laminated label body of the present invention, there can be formed the manufacturing device of the laminated label body, wherein the peeling device includes a peeling plate provided between the paper feeding portion and the winding portion; and the release paper is folded back at a sharp angle around a tip end portion of the peeling plate in order to peel off the label when passing through the tip end portion of the peeling plate.

In the manufacturing device of the laminated label body of the present invention, there can be formed the manufacturing device of a laminated label body, wherein the peeling device includes: a vertical position adjustment mechanism for changing a position of the peeling plate in a vertical direction with respect to an area for applying rotational pressure between the lamination pull roll and the guide roll of the lamination device; a back and forth position adjustment mechanism for changing the position of the peeling plate in a back and forth direction with respect to the area for applying rotational pressure; and an angle adjustment mechanism for changing an insertion angle of the peeling plate into a space between the lamination pull roll and the guide roll.

With the configuration, a predetermined laminated label body can be manufactured by adjusting the vertical position, the back and forth position, and the insertion angle of the peeling plate in accordance with a paper type, a paper thickness, a shape of the label, an adhesive force between the release paper and the label and the like.

In the manufacturing device of the laminated label body of the present invention, there can be formed the manufacturing device of the laminated label body, wherein
the vertical position adjustment mechanism is attached to the device body in a cantilever structure;
the back and forth position adjustment mechanism is attached to a vertically moving portion of the vertical position adjustment mechanism; and
the peeling plate is attached to a portion moving in the back and forth direction of the back and forth position adjustment mechanism via the angle adjustment mechanism.

With the configuration, since the device body does not exist on a front side of each of the adjustment mechanisms, each of the adjustment mechanisms can be easily adjusted and operated in a short time.

In the manufacturing device of the laminated label body of the present invention, there can be formed the manufacturing device of the laminated label body, wherein
the first conveying speed of the release paper by the paper feeding portion and the winding portion and the second conveying speed of the label by the lamination device are configured to be capable of being controlled alone, respectively, and a speed ratio of the first conveying speed of the release paper and the second conveying speed of the label is configured being arbitrarily set.

With the configuration, since the speed ratio of the first conveying speed and the second conveying speed can be changed by controlling to change the conveying speed of the label by the lamination device, an overlapping dimension (amount of overlap) of the preceding label and the subsequent label can be adjusted, therefore the configuration is applicable to a different use in a different labeler machine or the like.

In the manufacturing device of the laminated label body of the present invention, there can be formed the manufacturing device of the laminated label body, further including a product winding portion for winding the laminated label body conveyed from the lamination device in a roll shape on a downstream side of the lamination device.

With the configuration, the label can be stuck, one by one, to an article to be stuck by winding the laminated label body in a roll shape and by setting it on the labeler machine.

In the manufacturing device of the laminated label body of the present invention, there can be formed the manufacturing device of the laminated label body, wherein
the lamination device conveys a plurality of the laminated label bodies in a row adjacently in a direction orthogonal to the conveying direction; and
a plurality of the product winding portions is provided on the downstream side of the lamination device, and the plurality of the laminated label bodies is separately wound by each of different product winding portions.

With the configuration, since the plurality of the laminated label bodies is wound by separate product winding portions, side edge portions of the laminated label body are not overlapped with each other.

In the manufacturing device of the laminated label body of the present invention, there can be formed the manufacturing device of the laminated label body, wherein
the paper feeding portion has a feeding shaft for attaching the release paper wound in a roll shape to which labels are stuck;
the winding portion has a winding shaft for winding the release paper in a roll shape; and
the product winding portion has a product winding shaft for winding the laminated label body in a roll shape; and
the feeding shaft, the winding shaft, and the product winding shaft are attached to the device body in a cantilever structure.

With the configuration, the release paper to which the label is stuck can be wound in a roll shape and be easily attached to the feeding shaft in a short time.

The release paper wound by the winding shaft can be easily removed from the winding shaft in a short time.

The laminated label body wound by the product winding shaft can be easily removed from the product winding shaft in a short time.

According to the present invention, since the laminated label body on which multiple labels are overlapped in a form of steps and stuck can be manufactured by the paper feeding portion, the winding portion, the peeling device, and the lamination device, the laminated label body without using the release paper can be manufactured with the simple and space-saving configuration.

### BRIEF DESCRIPTION OF THE DRAWINGS

Fig. 1 is a front view illustrating a whole of the manufacturing device of the laminated label body.
Fig. 2 is a view illustrating a release paper to which a label is stuck.
Fig. 3 is a front view illustrating a peeling plate and a lamination device.
Fig. 4 is a plan view illustrating the peeling plate and the lamination device.
Figs. 5A to 5E are views for explaining a peeling-off operation of the label and a conveying operation of the label to lamination devices.
Figs. 6A to 6E are views showing a way in which a preceding label and a subsequent label are overlapped and stuck.
Fig. 7 is an enlarged front view of the peeling device.
Fig. 8 is a plan view of Fig. 7.
Fig. 9 is a right side view of Fig. 8.
Fig. 10 is an enlarged front view of the lamination device.
Fig. 11 is an A-A cross-sectional view of Fig. 10.
Fig. 12 is an enlarged cross-sectional view of a feeding shaft.
Fig. 13 is an enlarged cross-sectional view of a winding shaft.
Fig. 14 is an enlarged cross-sectional view of a product winding shaft.
Fig. 15 is a plan view of a device body.
Fig. 16 is a side view of the device body.

### DESCRIPTION OF THE PREFERRED EMBODIMENTS

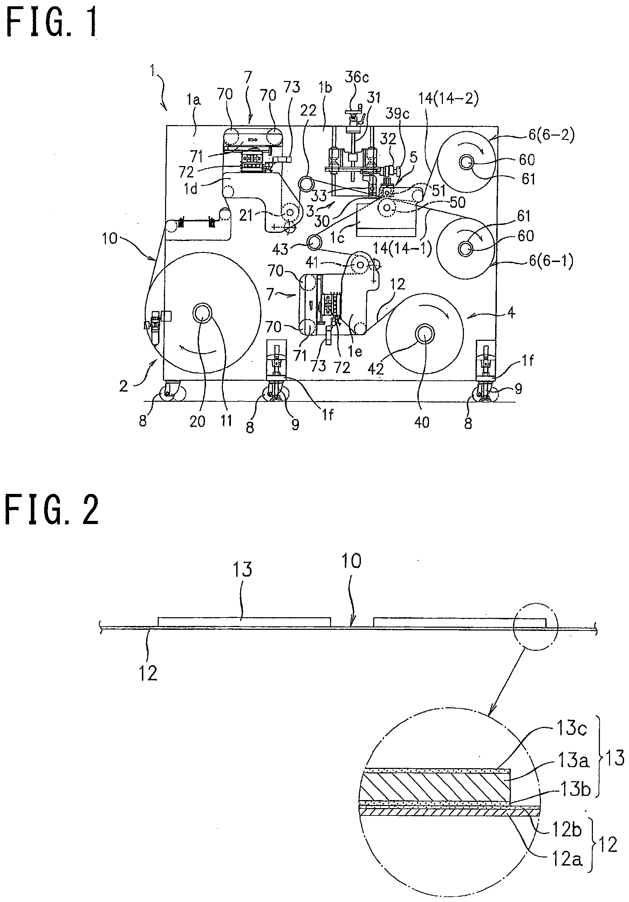

An embodiment of a manufacturing device of a laminated label body of the present invention will be described with reference to Fig. 1. Fig. 1 is a front view illustrating the whole of the manufacturing device of the laminated label body.

The manufacturing device 1 of the laminated label body includes a device body 1a.

The device body 1a includes a paper feeding portion 2, a peeling device 3, a winding portion 4, and a lamination device 5.

The paper feeding portion 2 conveys (feeds) a label paper 10 toward the peeling device 3.

The paper feeding portion 2 has a feeding shaft 20 and a feeding pull roll 21.

A rolled paper is formed by winding in a roll shape the label paper 10 around a paper tube 11.

The paper tube 11 of the rolled paper is attached detachably to the feeding shaft 20, then the lavel paper 10 in a roll shape is set thereon. The set label paper 10 is passed through to the feeding pull roll 21, and the label paper 10 is conveyed toward the peeling device 3 by driving the feeding pull roll 21.

The label paper 10 has a release paper 12 and multiple labels 13 stuck to the release paper 12, as illustrated in Fig. 2.

The release paper 12 is provided with a peeling layer 12b on a surface of a base material 12a. The surface of the release paper 12 is a peeling-off surface.

The label 13 is provided with an adhesive layer 13b on a back surface of the label base material 13a and printing is performed on the surface of the label base material 13a, and the printed surface is provided with the peeling layer 13c. The label base material 13a is made of various materials such as paper, plastic or aluminum.

The back surface of the label 13 is an adhesive surface, and the surface of the label 13 is a peeling-off surface.

The label paper 10 is produced as follows. First of all, printing is continuously performed on the surface of the label base material 13a with the label base material 13a being stuck to the release paper 12,then the printed surface is covered by the peeling layer 13c. After that, the label base material 13a, the adhesive layer 13b, and the peeling layer 13c are cut off into a predetermined shape while leaving a printed portion and are removed (that is, half-cutout) , and the remaining printed portion is used as the label 13.

Production method of the label paper 10 is not limited to the above but may be any other arbitrary production methods.

The peeling device 3 peels off the label 13 from the release paper 12 of the label paper 10 conveyed from the paper feeding portion 2. Then, the peeled-off label 13 is transferred toward the lamination device 5.

The peeling device 3 has a peeling plate 30. The peeling plate 30 is a plate shaped body directed to the conveying direction of the label paper 10 conveyed from the paper feeding portion 2.

The winding portion 4 winds the release paper 12 from which the label 13 of the label paper 10 has been peeled off.

The winding portion 4 has a winding shaft 40 and a winding pull roll 41. A winding paper tube 42 is detachably attached to the winding shaft 40.

The release paper 12 of the label paper 10 conveyed from the paper feeding portion 2 (that is, the release paper 12 to which the labels 13 are stuck) is passed through a tip end portion 30a of the peeling plate 30 (that is, an end portion in a direction toward the conveying direction of the label paper 10) and is folded back to a direction directed a winding side guide roll 43 and a tip end edge of the folded-back release paper 12 is fixed to the winding paper tube 42 via the winding pull roll 41.

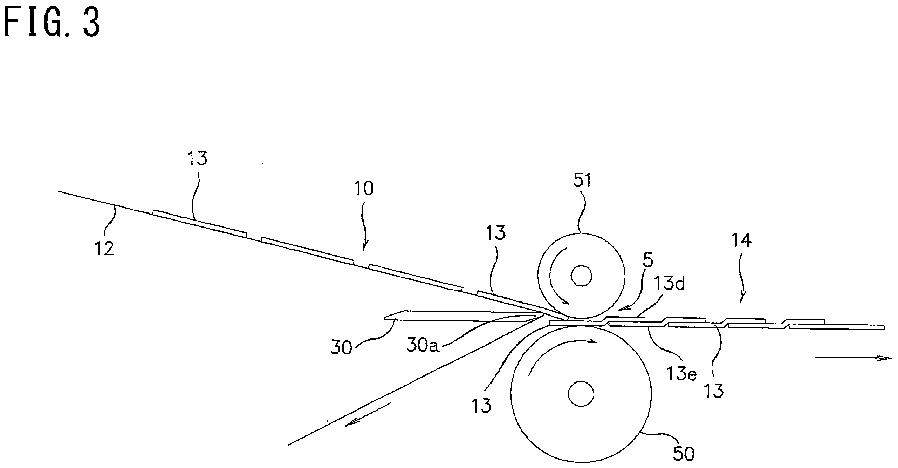

In this state, the feeding pull roll 21, the winding pull roll 41, and the winding shaft 40 are rotationally driven, and thus the release paper 12 of the label paper 10 is bent at a sharp angle around the tip end portion 30a of the peeling plate 30 and passes through the tip end portion 30a as illustrated in Fig. 3. Then, during passage of the release paper 12 through the tip end portion 30a of the peeling plate 30, the label 13 is sequentially peeled off from the release paper 12, the label 13 is completely peeled off from the release paper 12,when the label 13 has passed through the tip end portion 30a of the peeling plate 30,

The lamination device 5 manufactures the laminated label body 14 in a form of a continuous strip which has repeeable labels and is laminated by sticking an adhesive surface (adhesive layer 13b) of one label 13 peeled off by the peeling device 3 over a peeling-off surface (peeling layer 13c) of another label 13 which has been already peeled off in a form of steps, while shifting the overlapped portion of the labels 13 in the conveying direction.

The laminated labels 14 can be wound in a roll shape.

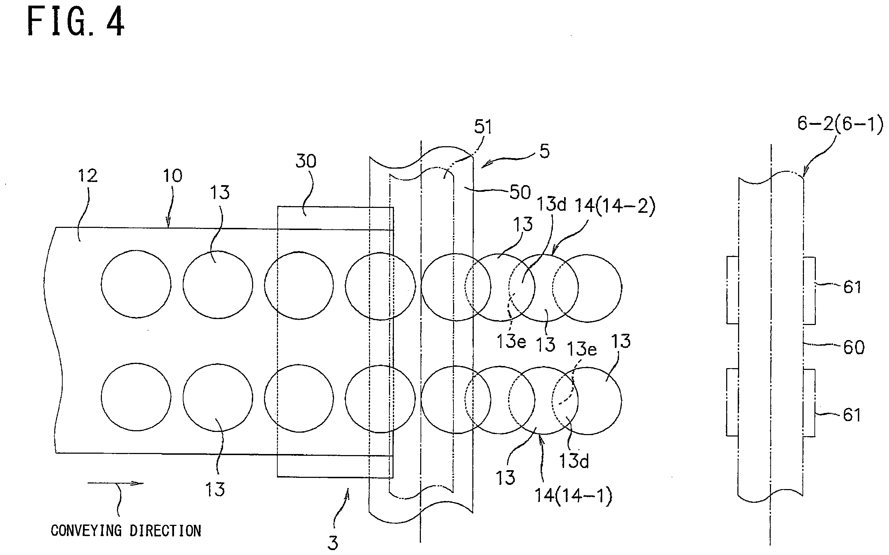

The lamination device 5 includes a lamination pull roll 50, and a guide roll (doubling as a pressure roll) 51 rotatably pressed against (nipped with) the lamination pull roll 50, as illustrated in Figs. 3 and 4.

The lamination pull roll 50 is rotationally driven.

The guide roll 51 is rotatably supported.

The guide roll 51 has a diameter smaller than that of the lamination pull roll 50.

When the lamination pull roll 50 rotates, the guide roll 51 is rotated together with the lamination pull roll 50.

A line connecting the axes of the lamination pull roll 50 and the guide roll 51 is orthogonal to the conveying direction of the release paper 12 (label 13) and positions of the lamination pull roll 50 and the guide roll 51 in the conveying direction are the same.

The tip end portion 30a of the peeling plate 30 of the peeling device 3 (that is, a folded-back portion of the release paper 12 of the label paper 10) is located above an area for applying rotational pressure (nip area) between the lamination pull roll 50 and the guide roll 51. That is, the tip end portion 30a of the peeling plate 30 is opposed to a circumferential surface of the guide roll 51.

The conveying speed of the label 13 by the lamination device 5, that is, a rotating speed (circumferential speed) of the lamination pull roll 50 is controlled to be slower than the conveying speed (feeding speed) of the release paper 12 of the label paper 10 by the paper feeding portion 2.

When the release paper 12 passes through the tip end portion 30a of the peeling plate 30, the label 13 is sequentially peeled off from the release paper 12 while the tip end portion of the label 13 in the conveying direction is being conveyed toward the circumferential surface of the guide roll 51, and is moved (fed in) to the area for applying rotational pressure between the lamination pull roll 50 and the guide roll 51 while being in contact with the circumferential surface of the guide roll 51.

Then, a tip end portion 13d in conveying-direction of the adhesive surface (adhesive layer 13b) of the fed-in label 13 is stuck over a rear end portion 13e in conveying-direction of the release surface (release layer 13c) of the preceding label 13.
The laminated label body 14 in a form of a continuous strip having repeelable labels is manufactured by laminating the multiple labels 13 in a form of steps as described above.

An overlap length in the conveying direction between rear end portion 13e of the preceding label 13 and the tip end portion 13d of the subsequent label 13 in the conveying direction respectively, that is, the amount of overlap is determined by a speed ratio of the conveying speed of the label 13 by the lamination device 5 and the conveying speed of the release paper 12 by the paper feeding portion 2.

For example, as the speed ratio is increased, the amount of overlap between the preceding label 13 and the fed-in label 13 becomes larger (longer).

As the speed ratio is decreased, the amount of overlap between the preceding label 13 and the fed-in label 13 becomes smaller (shorter).

The manufacturing device 1 of the laminated label body of the present invention includes a structure for changing the amount of overlap between the preceding label 13 and the fed-in label 13 by controlling the conveying speed of the label 13 in the lamination device 5.

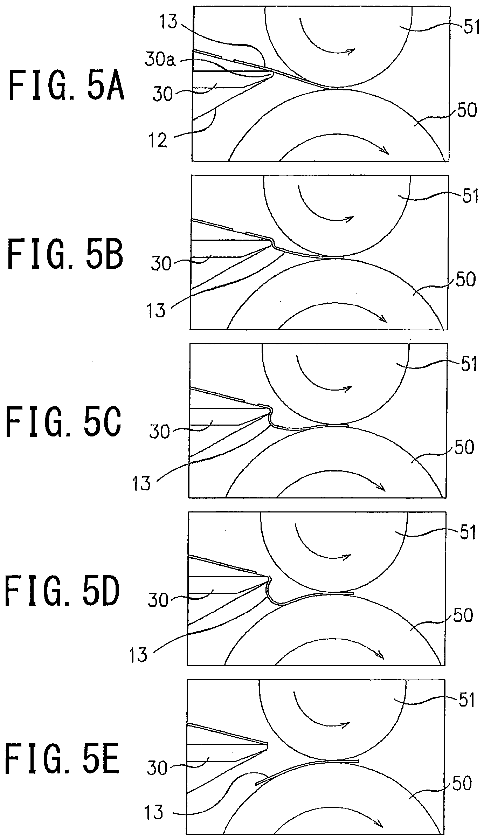

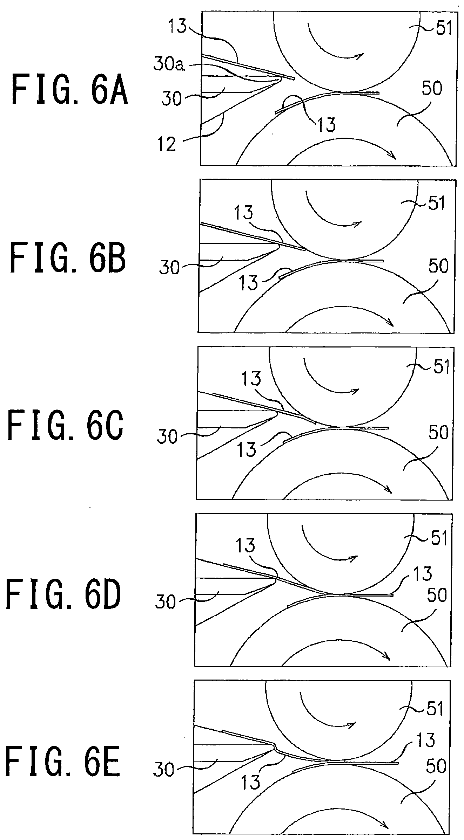

Next, an operation of manufacturing the laminated label body 14 by laminating the labels 13 peeled off from the release paper 12 will be described in detail with reference to Figs. 5 and 6. Note that the circumferential surface of the lamination pull roll 50 is subjected to special coating treatment applying stain preventing measure and non-adhesiveness to prevent adhesion of the adhesive surface (adhesive layer 13b) of the label 13. For example, the roll surface is subjected to ceramics thermal spraying, and is further coated with special polymer.

Figs. 5A to 5E are views for explaining steps, in a time series manner, in which, the release paper 12 of the label paper 10 is folded back at a sharp angle around the tip end portion 30a of the peeling plate 30 while making the release paper 12 slide on the tip end portion 30a, and the first label 13 stuck to the release paper 12 is pelled off from the release paper 12 , then the first label 13 peeled off from the tip end portion 30a of the peeling plate 30 is conveyed up to the area for applying rotational pressure beween the guide roll 51 and the lamination pull roll 50 of the lamination device 5.

The first label 13 means a label stuck to the most downstream side of the release paper 12 in the conveying direction.

Figs. 5A to 5E illustrate steps of an operation in a state where the conveying speed of the label 13 by the lamination device 5 is made slower than the conveying speed by the paper feeding portion 2, so that the speed ratio of the conveying speed of the release paper 12 of the label paper 10 conveyed to the peeling plate 30 of the peeling device 3, that is, the conveying speed of the release paper 12 of the label paper 10 by the paper feeding portion 2 and the conveying speed of the label 13 by the lamination device 5, that is, the rotating speed (circumferential speed) of the lamination pull roll 50 becomes 1.5 to 1.

First, by folding back the release paper 12 around the tip end portion 30a of the peeling plate 30 while making the release paper 12 slide on the tip end portion 30a as illustrated in Fig. 5A, the tip end portion of the first label 13 stuck to the most downstream side of the release paper 12 in the conveying direction is peeled off from the release paper 12.

The tip end portion of the peeled first label 13 is fed in between the lamination pull roll 50 and the guide roll 51 while being in contact with the circumferential surface of the guide roll 51.

The tip end portion of the label 13 is the downstream side portion of the label 13 in the conveying direction.

In addition, the first label 13 peeled off as illustrated in Fig. 5B is conveyed while the tip end portion is pressed and held by the area for applying rotational pressure between the lamination pull roll 50 and the guide roll 51, in this state , since the conveying speed of the release paper 12 is faster than the conveying speed of the label 13 by the lamination pull roll 50, and furthermore, the rear end portion of the first label 13 is still stuck to the release paper 12, the rear end portion of the first label 13 is conveyed faster than the tip end portion, therefore an intermediate portion of the label 13 is loosened in accordance with the conveying speed difference.

The rear end portion of the label 13 means an upstream side portion of the label 13 in the conveying direction.

The intermediate portion of the label 13 means an intermediate portion of the label 13 in the conveying direction and means a portion not adhered to the release paper 12 and not pressed nor held between the lamination pull roll 50 and the guide roll 51.

As illustrated in Fig. 5C, further, the loosening of the intermediate portion of the label 13 becomes larger little by little as the label 13 is peeled off, and a part of the intermediate portion of the label 13 closer to the tip end is pressed against the circumferential surface of the lamination pull roll 50.

As illustrated in Fig. 5D, when the label 13 is peeled off just before being fully peeled off, the loosening of the intermediate portion of the label 13 becomes much larger, and most of the tip end portion and the intermediate portion of the first label 13 are pressed against the circumferential surface of the lamination pull roll 50.

As illustrated in Fig. 5E, when the first label 13 is fully peeled off from the release paper 12, most part of the first label 13 is held in contact with the circumferential surface of the lamination pull roll 50. After that, the first label 13 is conveyed along with rotation of the lamination pull roll 50.

As illustrated in Figs. 5A to 5E, the first label 13 peeled off from the release paper 12 first is sequentially peeled off while causing the loosening of the intermediate portion of the label 13 at all times, and is conveyed to a space between the lamination pull roll 50 and the guide roll 51. In addition, when the label is fully peeled off, most of the first label 13 is held in contact with the circumferential surface of the lamination pull roll 50.

Figs. 6A to 6E are views showing a way in which a preceding label and a subsequent label are overlapped and stuck, in a time series manner, after the first label 13 is fully peeled off from the release paper 12, until the second label 13 is laminated (overlapped) on the first label 13 in a form of steps. Also in Figs. 6A to 6E, steps where the speed ratio is set to 1.5 to 1 is illustrated.

As illustrated in Fig. 6A, at the same time that the first label 13 is conveyed along with the rotation of the lamination pull roll 50, peeling of the tip end portion of the second label 13 is started off from the release paper 12 having passed through the tip end portion 30a of the peeling plate 30.

As illustrated in Fig. 6B, the tip end portion of the second label 13 started to be peeled off from the release paper 12 is started to be brought into contact with the circumferential surface of the guide roll 51.

In the meanwhile, the first label 13 is conveyed little by little between the lamination pull roll 50 and the guide roll 51, and the tip end portion of the first label 13 is separated from the circumferential surface of the lamination pull roll 50 and is fed out from a space between the lamination pull roll 50 and the guide roll 51.

As illustrated in Fig. 6C, as peeling-off of the second label 13 from the release paper 12 further proceeds, the tip end portion of the second label 13 is conveyed toward the intermediate portion of the peeling-off surface of the first label 13 held on the circumferential surface of the lamination pull roll 50 while following the circumferential surface of the guide roll 51.

As illustrated in Fig. 6D, the second label 13 is further peeled off from the release paper 12, and the tip end portion of the second label 13 approaches the intermediate portion of the peeling-off surface of the first label 13 held on the circumferential surface of the lamination pull roll 50.

As illustrated in Fig. 6E, the first label 13 is peeled off from the release paper 12 more than one illustrated in Fig. 6D, and the tip end portion on the adhesive surface of the second label 13 is overlapped in a form of steps, with the intermediate portion of the peeling-off surface of the first label 13 being held on the circumferential surface of the lamination pull roll 50, and is pressed and held by the area for applying rotational pressure of the lamination pull roll 50 and the guide roll 51 and is stuck.

After that, the tip end portion of the second label 13 is conveyed along with the first label 13, and the intermediate portion of the second label 13 is lessened in the same way as shown in Figs. 5C and 5D.

Then, when the second label 13 is fully peeled off from the release paper 12, the rear end portion on the adhesive surface of the second label 13 is brought into contact with the circumferential surface of the lamination pull roll 50, and the tip end portion of the second label 13 is overlapped with the rear end portion of the first label 13.

The overlapped portion between the first label 13 and the second label 13 is pressed when the portion passes through the area for applying rotational pressure between the lamination pull roll 50 and the guide roll 51, and is firmly stuck together.

The third label 13 stuck to the release paper 12 is overlapped with the second label 13 and is stuck to the second label 13 in the same way as shown in Figs. 6A to 6E.

The fourth label 13 stuck to the release paper 12 is overlapped with the third label 13 and is stuck to the third label 13 in the same way as shown in Figs. 6A to 6E.

Summarizing the operation illustrated in Figs. 6A to 6E, the tip end portion of the adhesive surface (adhesive layer 13b) of the subsequent label 13 peeled off from the release paper 12 by the peeling plate 30 is overlapped with and stuck to the rear end portion of the peeling-off surface (peeling layer 13c) of the preceding label 13 which has been already peeled off and held on the circumferential surface of the lamination pull roll 50.

That is, the subsequent label 13 is stuck to the preceding label 13 in a form of steps while being shifted in the conveying direction.

As described above, by perfoming repeatedly a series of the steps illustrated in Figs. 5A to 5E and Figs. 6A to 6E, the subsequent label 13 is stuck to the peeling-off surface (peeling layer 13c) of the preceding label 13 in a form of steps while being shifted in the conveying direction by making use of the adhesive surface (adhesive layer 13b) of the label 13 and is laminated in a form of a continuous strip shape, as the result, the laminated label body 14 is formed.

In the laminated label body 14, the adhesive surface (adhesive layer 13b) of each label 13 is continuous and the peeling-off surface (peeling layer 13c) of each label 13 is continuous.

Therefore, the adhesive surface adheres to the peeling-off surface by winding the laminated label body 14 in a roll shape.

Moreover, the label 13 can be peeled one by one off the labels wound in a roll shape. That is, the label 13 is repeelable.

According to the device 1 for manufacturing the laminated label body of the present embodiment, the repeelable, continuous strip shaped, laminated label body 14 can be manufactured without using the release paper by laminating the labels 13 peeled off from the release paper 12 in the form of a steps,by means of the paper feeding portion 2, the peeling device 3, the winding portion 4, and the lamination device 5, since the release paper or the endless belt member is not used, simple and space-saving structure can be obtained.

Furthermore, since the laminated label body 14 is manufactured only by the labels 13 in a continuous strip shape without using the release paper, through stacking the labels together in a form of steps by means of the adhesive surface of one of the label, while shifting the labels in the conveying direction, the laminated label body 14 can be wound in a roll from which the label can be re-peeled one by one, and a labor for peeling off the release paper in use is not required, with the result that work efficiency and production efficiency can be improved. Moreover, since the release paper is not used, resources and environment problems can be dealed.

In addition, since the laminated label body 14 does not use the release paper, the number of labels as large as about twice that of the prior-art laminated label bodies using the release paper can be wound in the the same winding diameter, which makes a product space half and is effective in reduction of a transport cost.

Furthermore, since the laminated label body 14 wound in a roll shape can be set on a label sticking device (labeler machine) and label 13 can be stuck to an article to be stuck one by one, the label 13 can be reliably stuck to the article to be stuck.

The device 1 for manufacturing the laminated label body includes the device (product winding portion) for winding the laminated label body 14 manufactured in a roll shape as above.

That is, as illustrated in Fig. 1, a product winding portion 6 is provided on the downstream side of the lamination device 5.

The product winding portion 6 includes a product winding shaft 60, and a paper tube 61 detachably attached to the product winding shaft 60.

The laminated label body 14 is wound by the paper tube 61 in a roll shape while adhesing the adhesive surface and the peeling-off surface of the label 13 each other, by adhesing the tip end edge on the adhesive surface of the label 13 at the most tip end of the laminated label body 14 manufactured by the lamination device 5 to the paper tube 61, and then drivingly rotating the product winding shaft 60.

The laminated label body 14 wound in a roll shape is removed together with the paper tube 61 from the product winding shaft 60.

The removed roll-shaped laminated label body 14 is set on the label sticking device (labeler machine) not shown, and the labels can be stuck to the article to be stuck one by one.

The device 1 for manufacturing the laminated label body can manufacture a plurality of the laminated label bodies 14 at the same time. That is, the plurality of laminated label bodies 14 can be manufactured at the same time by using the label paper 10 on which the labels 13 are stuck in plural rows at an interval in the conveying direction at a plurality of positions in the direction orthogonal to the conveying direction of the release paper 12.

In this case, a plurality of laminated label bodies 14 is conveyed adjacent to each other in a row at an interval in the direction orthogonal to the conveying direction from the lamination device 5. That is, the laminated label bodies 14 are conveyed in plural rows from the lamination device 5.

A first laminated label body 14-1 and a second laminated label body 14-2 can be manufactured at the same time, for example, by using the label paper 10 on which the labels 13 are stuck in two rows, that is, a row closer to one side in the direction orthogonal to the conveying direction of the release paper 12 and another row closer to the other side, respectively, as illustrated in Fig. 4.

Then, in the case where an interval between each of a plurality of the laminated label bodies 14 in the direction orthogonal to the conveying direction of the release paper 12 is small, when a plurality of the conveyed laminated label bodies 14 is wound by the product winding shaft 60 of the single product winding portion 6, side edge portions of the adjacent laminated label bodies 14 in the direction orthogonal to the conveying direction are sometimes overlapped each other, which renders to an incorrect winding.

In the case where the interval between the two rows of the laminated label bodies 14-1 and 14-2 in the direction orthogonal to the conveying direction of the release paper 12 illustrated, for example, in Fig. 4 is small, one of the side edge portions of the first laminated label body 14-1 and the other side edge portion of the second laminated label body 14-2 are sometimes wound by the product winding shaft 60 while being overlapped each other.

This can occur more often when the number of laminated label bodies 14 manufactured at the same time is larger.

The device 1 for manufacturing the laminated label body illustrated in Fig. 1 includes a plurality of product winding portions, that is, for example, a first product winding portion 6-1 and a second product winding portion 6-2. In addition, the first product winding potion 6-1 and the second product winding portion 6-2 are attached to the device body 1a in vertically shifted positions.

As illustrated in Fig. 4, the shaft center of the product winding shaft 60 of the first product winding portion 6-1 and the shaft center of the product winding shaft 60 of the second product winding portion 6-2 are in parallel with the shaft center of the lamination pull roll 50 and the shaft center of the guide roll 51.

Each of lengths of the product winding shafts 60 of the first and second product winding portions 6-1 and 6-2 is substantially the same as the length of the lamination pull roll 50 or the length of the guide roll 51.

The paper tube 61 is attached to the product winding shaft 60 of the first product winding portion 6-1 closer to one side in the axial direction. A length of the paper tube 61 is substantially the same size (width) as that of the first laminated label body 14-1 in the direction orthogonal to the conveying direction.

The paper tube 61 is attached to the product winding shaft 60 of the second product winding portion 6-2 closer to the other side in the axial direction. A length of the paper tube 61 is substantially the same size (width) as that of the second laminated label body 14-2 in the direction orthogonal to the conveying direction.

A distance from the lamination pull roll 50 to the product winding shaft 60 (paper tube 61) of the first product winding portion 6-1, that is, a paper path length and the distance from the lamination pull roll 50 to the product winding shaft 60 (paper tube 61) of the second product winding portion 6-2, that is, the paper path length are the same.

As a result, the number of the labels 13 of the first laminated label body 14-1 wound by the product winding shaft 60 (paper tube 61) of the first product winding portion 6-1 and the number of the labels 13 of the second laminated label body 14-2 wound by the product winding shaft 60 (paper tube 61) of the second product winding portion 6-2 are the same.

Then, the first laminated label body 14-1 is wound by the product winding shaft 60 (paper tube 61) of the first product winding portion 6-1. The second laminated label body 14-2 is wound by the product winding shaft 60 (paper tube 61) of the second product winding portion 6-2.

Thus, even in the case where the interval between the first and second laminated label bodies 14-1 and 14-2 in the direction orthogonal to the conveying direction of the release paper 12 is small, when the first and second laminated label bodies 14-1 and 14-2 are wound into a rolled state, one of the side edge portions of the first laminated label body 14-1 and the other side edge portion of the second laminated label body 14-2 are not overlapped each other, and thus the first and second laminated label bodies 14-1 and 14-2 can be correctly wound.

The number of the laminated label bodies 14 to be manufactured at the same time is not limited to two, but an arbitrary number of the laminated label bodies 14 can be manufactured at the same time.

For example, four pieces of the laminated label bodies 14 and eight pieces of the laminated label bodies 14 can be manufactured at the same time, and when four pieces of the laminated label bodies 14 are manufactured, two laminate label bodies 14 are wound by the product winding shafts 60 (paper tubes 61) of the first and second product winding portions 6-1 and 6-2, respectively.

When eight pieces of the laminated label bodies 14 are manufactured at the same time, four pieces of the laminated label bodies 14 are wound by the product winding shafts 60 (paper tubes 61) of the first and second product winding portions 6-1 and 6-2, respectively.

In addition, when a plurality of the laminated label bodies 14 is to be wound by the same product winding shaft 60, it is desirable to use a friction shaft which will be described later.

Note that the number of the product winding portions 6 to be provided may be three or more in accordance with the number of the laminated label bodies 14 to be manufactured at the same time.

Furthermore, when one piece of the laminated label body 14 is to be manufactured, it is only necessary to provide one unit of the product winding portion 6.

A manufacturing method of the laminated label body 14 by the manufacturing device 1 of the laminated label body of the aforementioned embodiment is as follows.

A rolled paper obtained by winding, in a roll shape , the release paper 12 to which a plurality of labels 13 is stuck is conveyed by the paper feeding portion 2, and the release paper 12 is led to the winding portion 4 via the peeling plate 30 of the peeling device 3, and when the release paper 12 is folded back at and passes through the tip end portion 30a of the peeling plate 30, the label 13 is peeled off from the release paper 12 by the peeling plate 30, only the peeled-off label 13 is conveyed (moved) to a space between the guide roll 51 and the lamination pull roll 50, a part of the adhesive surface (adhesive layer 13b) of the conveyed label 13 is overlapped with and stuck to the peeling-off surface (peeling layer 13c) of the preceding label 13, and thus a continuous strip shape laminated label body 14 in which a plurality of labels 13 is laminated in a form of steps is manufactured.

Furthermore, the laminated label body 14 is wound around the product winding shaft 60 in a roll shape by sticking the adhesive surface of the label 13 to the product winding shaft 60 of the product winding portion 6 provided on the downstream side of the lamination pull roll 50 and the guide roll 51.

Next, each portion will be described in detail.

As illustrated in Fig. 1, the peeling device 3 includes a vertical position adjustment mechanism 31 for changing the position of the peeling plate 30 in the vertical direction, a back and forth position adjustment mechanism 32 for changing the position of the peeling plate 30 in the back and forth direction, and an angle adjustment mechanism 33 for changing an angle of the peeling plate 30 to the horizontal plane.

The vertical position adjustment mechanism 31 is to change the position of the peeling plate 30 in the vertical direction by moving the peeling plate 30 in the vertical direction.

Position of the tip end portion 30a of the peeling plate 30 is changed in the vertical direction with respect to the area for applying rotational pressure between the lamination pull roll 50 and the guide roll 51 of the lamination device 5 by changing the position of the peeling plate 30 in the vertical direction. That is, the position of the tip end portion 30a of the peeling plate 30 with respect to the guide roll 51 is changed.

The back and forth position adjustment mechanism 32 is to change the position of the peeling plate 30 in the back and forth direction by moving the peeling plate 30 in the back and forth direction. Note the back and forth direction means the conveying direction of the release paper 12 to which the label 13 is stuck, and is a right and left direction in Fig. 1.

By changing the position of the peeling plate 30 in the back and forth direction, the distance in the conveying direction between the tip end portion 30a of the peeling plate 30 and the area for applying rotational pressure between the lamination pull roll 50 and the guide roll 51 of the lamination device 5 is changed. That is, the distance between the tip end portion 30a of the peeling plate 30 and the guide roll 51 is changed.

The angle adjustment mechanism 33 is to change the angle of the peeling plate 30 to the horizontal plane by vertically rocking the peeling plate 30.

The insertion angle of the tip end portion 30a of the peeling plate 30 to the lamination pull roll 50 and the guide roll 51 is changed by changing the angle of the peeling plate 30 to the horizontal plane.

Therefore, optimal state can be obtained, by adjusting the vertical position of the tip end portion 30a of the peeling plate 30 with respect to the area for applying rotational pressure between the lamination pull roll 50 and the guide roll 51, the distance between the area for applying rotational pressure between the laminated pull roll 50 and the guide roll 51, and the tip end portion 30a of the peeling plate 30, and the insertion angle of the tip end portion 30a of the peeling plate 30 to the lamination pull roll 50 and the guide roll 51, in accordance with the type of the label paper 10 such as a paper type, a paper thickness, a shape, and firmness of the label 13, and an adhesive force between the release paper 12 and the label 13.

Accordingly, the predetermined laminated label body 14 can be manufactured by using the aforementioned label papers 10 of different types.

That is, in the manufacturing device 1 of the laminated label body 14, if the aforementioned position in the vertical direction, the position in the back and forth direction, and the insertion angle of the peeling plate 30 are fixed, the predetermined laminated label body 14 sometimes cannot be manufactured, because some problems will arise such as bending of the tip end portion of the label 13 in contact with the circumferential surface of the guide roll 51, sticking to the circumferential surface of the guide roll 51, from such reasons as using different type of the label paper 10 and so on, in the manufacturing steps in which the release paper 12 is folded back around the tip end portion 30a of the peeling plate 30 while sliding on the tip end portion 30a to peel off the label 13 from the release paper 12, then the label 13 is conveyed to a space between the lamination pull roll 50 and the guide roll 51 while being in contact with the circumferential surface of the guide roll 51.

Accordingly, in the case of using the label paper 10 of different types in a paper type, a paper thickness, a shape, and firmness of the label 13, and an adhesive force between the release paper 12 and the label 13, the aforementioned position in the vertical direction, the position in the back and forth direction, and the insertion angle of the peeling plate 30 are adjusted to optimal values, and thus the manufacturing device 1 may be operated as in the aforementioned referred to Figs. 5 and 6.

As a result, the predetermined laminated label body 14 can be manufactured by using the label paper 10 of different types.

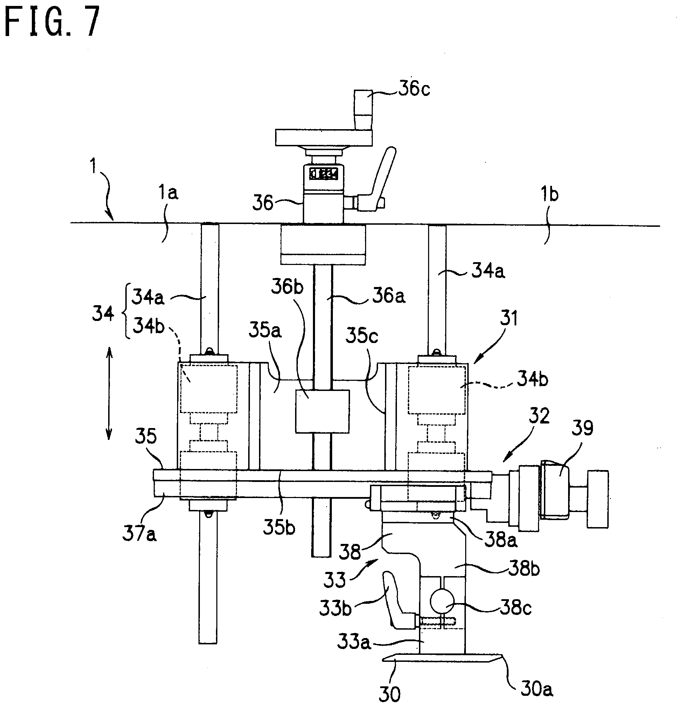

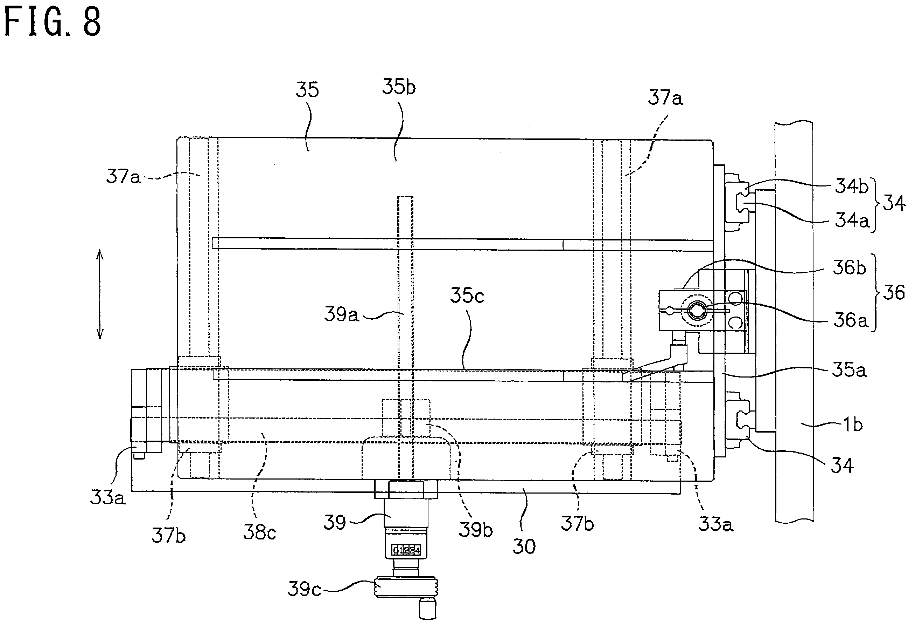

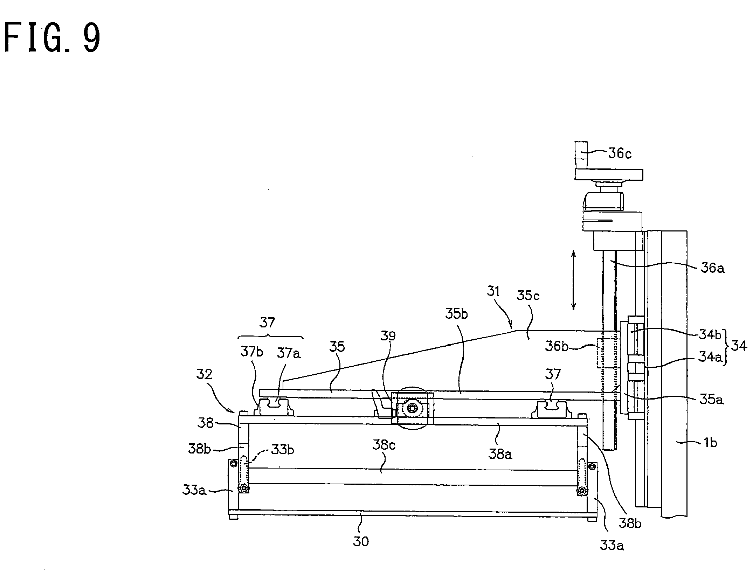

Next, each of the adjustment mechanisms 31, 32, and 33 will be described in reference with Figs. 7 to 9.

The device body 1a includes a vertical plate-shaped frame 1b. Each motor which will be described later is mounted on a back surface of the frame 1b, therefore the frame 1b is a motor-side frame.

A linear guide 34 toward the vertical direction is mounted on a surface of the frame 1b.

The linear guide 34 includes a pair of linear guide rails 34a toward the vertical direction and a pair of movers 34b moving in the vertical direction along the pair of linear guide rails 34a.

A vertical moving body 35 is attached over the pair of movers 34b. The vertical moving body 35 includes a vertical plate 35a fixed over the pair of movers 34b, a lateral plate 35b fixed to the vertical plate 35a, and a reinforcing rib 35c fixed over the lateral plate 35b and the vertical plate 35a.

That is, the vertical moving body 35 is mounted on the surface of the frame 1b movably by the linear guide 34, in the vertical direction.

Vertical moving means 36 for moving the vertical moving body 35 in the vertical direction over the frame 1b and the vertical moving body 35 is attached.

The vertical moving means 36 includes: a feed screw toward the vertical direction mounted rotatably on the frame 1b, for example, a precision ball screw 36a; and a nut mounted on the vertical moving body 35 (vertical plate 35a), for example, a precision nut 36b.

The precision ball screw 36a is screwed with the precision nut 36b. The vertical moving body 35 is moved in the vertical direction by rotating the precision ball screw 36a back and forth by operating a handle 36c.

The handle 36c incorporates a dial indicator and thus numerical control can be performed when the vertical moving body 35 is moved by rotation of the handle 36c.

The linear guide 37 toward the back and forth direction is mounted on the vertical moving body 35 (lateral plate 35b).

The linear guide 37 includes a pair of linear guide rails 37a toward the back and forth direction mounted on the vertical moving body 35 (lower surface of the lateral plate 35b) and a pair of movers 37b moving in the back and forth direction along the pair of linear guide rails 37a.

A back and forth moving body 38 is attached over the pair of movers 37b.

The back and forth moving body 38 includes a lateral plate 38a, a pair of vertical plates 38b fixed downward to both end portions in the longitudinal direction of the lateral plate 38a, and a peeling plate-attaching shaft 38c rotatably attached over the pair of vertical plates 38b.

That is, the back and forth moving body 38 is movably mounted on the vertical moving body 35 in the back and forth direction by the linear guide 37.

Back and forth moving means 39 for moving the back and forth moving body 38 in the back and forth direction is attached over the vertical moving body 35 (lateral plate 35b) and the back and forth moving body 38 (lateral plate 38a) .

The back and forth moving means 39 includes a feed screw toward the back and forth direction rotatably mounted on the vertical moving body 35 (lower surface of lateral plate 35b), for example, a precision ball screw 39a, and a nut mounted on the back and forth moving body 38 (lateral plate 38a), for example, a precision nut 39b.

The precision ball screw 39a is screwed with the precision nut 39b. The back and forth moving body 38 is reciprocated in the back and forth direction by normally or reversely rotating the precision ball screw by operating a handle 39c.

The handle 39c incorporates a dial indicator and thus numerical control can be performed when the back and forth moving body 38 is moved by rotation of the handle 39c.

The peeling plate-attaching shaft 38c is directed to a direction orthogonal to the back and forth direction. A pair of peeling plate-attaching members 33a are fitted with and fixed to both end portions of the peeling plate-attaching plate 38c in the axial direction.

The peeling plate 30 is fixed over lower surfaces of the pair of peeling plate-attaching members 33a.

A peeling plate-fixing lever 33b is attached to the pair of vertical plates 38b of the back and forth moving body 38.

The peeling plate-attaching shaft 38c is fixed unrotatably by rotating the peeling plate-fixing lever 33b in one direction.

The peeling plate-attaching shaft 38c becomes rotatable by rotating the peeling plate-fixing lever 33b in the other direction.

That is, the vertical plate 38b of the back and forth moving body 38 has a circular hole and a groove communicating with the circular hole and extending to one end portion of the vertical plate 38b. In this circular hole, the peeling plate-attaching shaft 38c is rotatably fitted. The vertical plate 38b is screwed with a screw across the groove, and the peeling plate-fixing lever 33b is fixed to this screw.

When rotating the peeling plate-fixing lever 33b in one direction, a groove gap is narrowed by the screw. The gap of a communicating portion with the groove is narrowed, and thus the circular hole is tightened by the peeling plate-attaching shaft 38c, and the peeling plate-attaching shaft 38c is unrotatably fixed.

When rotating the peeling plate-fixing lever 33b in the other direction, the vertical groove interval is widened by the screw, the circular hole is loosened with respect to the peeling plate-attaching shaft 38c, and the peeling plate-attaching shaft 38c becomes rotatable.

When vertically moving the vertical moving body 35 by rotating the precision ball screw 36a of the vertical moving means 36, the peeling plate 30 is vertically moved together with the back and forth moving body 38.

Thus, the linear guide 34, the vertical moving body 35, and the vertical moving means 36 constitute a vertical position adjustment mechanism 31 for changing the position of the peeling plate 30 in the vertical direction

In addition, since the linear guide 34 and the precision ball screw 36a are used, the vertical moving body 35 is moved in the vertical direction with high precision, and the position of the peeling plate 30 in the vertical direction can be adjusted with high accuracy.

When the back and forth moving body 38 is moved in the back and forth direction by rotating the precision ball screw 39a of the back and forth moving means 39, the peeling plate 30 together with the back and forth moving body 38 is moved in the back and forth direction.

Thus, the linear guide 37, the back and forth moving body 38, and the back and forth moving means 39 constitute a back and forth position adjustment mechanism 32 for changing the position of the peeling plate 30 in the back and forth direction.

In addition, since the linear guide 37 and the precision ball screw 39a are used, the back and forth moving body 38 is moved in the back and forth direction with high precision, and thus the position of the peeling plate 30 in the back and forth can be adjusted with high accuracy.

The angle of the peeling plate 30 to horizontal plane can be changed by vertically rocking the plate by hand, under the state that the peeling plate-fixing lever 33b is rotationed in the other direction.

Thus, the peeling plate-attaching shaft 38c, the peeling plate-attaching member 33a, and the peeling plate-fixing lever 33b constitute the angle adjustment mechanism 33 for changing the angle of the peeling plate 30 to the horizontal plane.

A shape of the tip end portion 30a of the peeling plate 30 is a sharp triangular shape whose tip end surface is semi-circularly chamfered to peel off the label 13 stuck to the release paper 12 while folding back the release paper 12 at the tip end portion 30a.

As a result, tearing-off or cutting-off of the release paper 12 can be prevented, when the release paper 12 is folded back around the tip end portion 30a of the peeling plate 30.

Since the vertical moving body 35 of the vertical position adjustment mechanism 31 has a cantilever structure in which its both end portions in the longitudinal direction are attached to the frame 1b by the linear guide 34 and is constituted such that the back and forth moving body 38 of the back and forth position adjustment mechanism 32 is attached to the vertical moving body 35, and the angle adjustment mechanism 33 is attached to the back and forth moving body 38, rock or a thrust load of the peeling plate 30 is not generated.

Moreover, as is obvious from the description above, the device body 1a or the like does not exist on the side opposite to the frame 1b of the vertical position adjustment mechanism 31, the back and forth position adjustment mechanism 32, and the angle adjustment mechanism 33; thus, the opreration and adjustment of the vertical position adjustment mechanism 31, the back and forth position adjustment mechanism 32, and the angle adjustment mechanism 33 can be performed from the side opposite to the frame 1b.

Therefore, the operation and adjustment of each of the adjustment mechanisms can be performed in a short time.

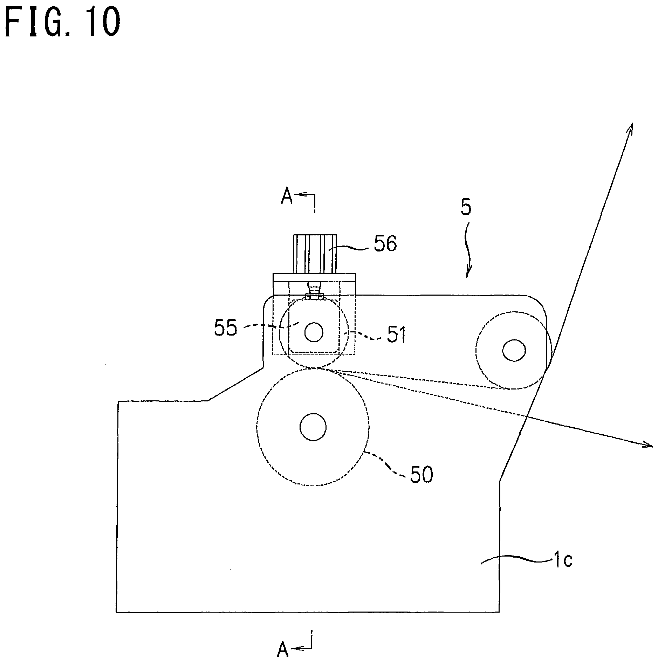

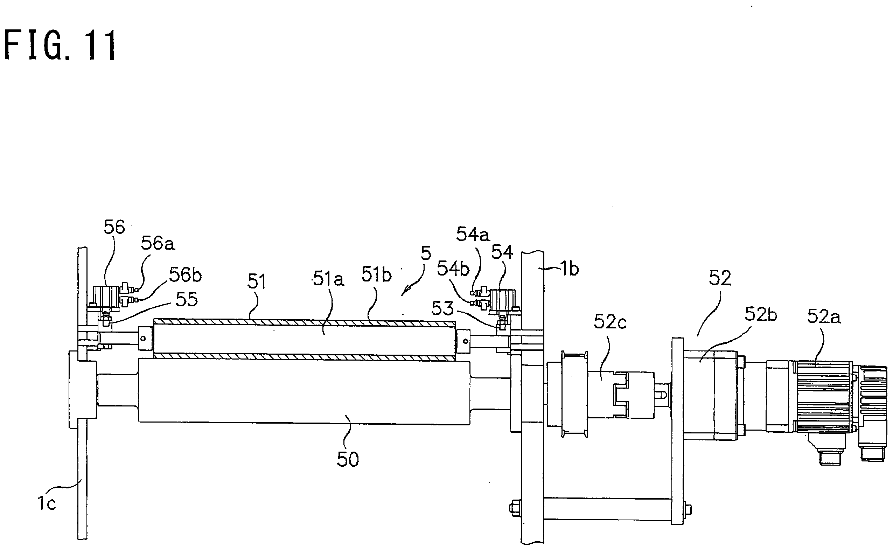

Next, the lamination device 5 will be described with reference to Figs. 10 and 11.

The device body 1a includes an auxiliary frame 1c for attaching the lamination device.

The auxiliary frame 1c is in a vertical plate shaped having enough size to mount the lamination pull roll 50 and the guide roll 51 and is opposed to the surface of the frame 1b which is the motor-side frame spaced therefrom. Furthermore, the auxiliary frame 1c is supported by the frame 1b by using a connecting member (stay), not shown.

One end portion of the lamination pull roll 50 in the axial direction is rotatably supported by the frame 1b. The other end portion of the lamination pull roll 50 in the axial direction is rotatably supported by the auxiliary frame 1c. That is, the lamination pull roll 50 has a both-side support structure by the frame 1b and the auxiliary frame 1c.

The circumferential surface of the lamination pull roll 50 is subjected to a special coating treatment applying stain-preventing measures and non-adhesiveness so that the adhesive surface (adhesive layer 13b) of the label 13 is not stuck.

The one end portion of the lamination pull roll 50 in the axial direction is connected to a lamination pull roll driving portion 52.

The lamination pull roll driving portion 52 includes a motor 52a attached to a back surface side of the frame 1b. An output side of the motor 52a is connected to the one end portion of the lamination pull roll 50 in the axial direction via a decelerator 52b and a shaft coupling 52c.

A rotating speed of the lamination pull roll 50 is changed by controlling the drive of the motor 52a.

As a result, the drive of the lamination pull roll 50 can be controlled alone by the lamination pull roll driving portion 52.

A first shaft support body 53 and a first cylinder 54 for attaching or removing the guide roll for vertically moving the first shaft support body 53 are provided above the one end portion of the lamination pull roll 50 on the frame 1b in the axial direction.

A second shaft support body 55 and a second cylinder 56 for attaching or removing the guide roll for vertically moving the second shaft support body 55 are provided above the other end portion of the lamination pull roll 50 on the auxiliary frame 1c in the axial direction.

The one end portion of the guide roll 51 in the axial direction is rotatably supported by the first shaft support body 53.

The other end portion of the guide roll 51 in the axial direction is rotatably supported by the second shaft support body 55.

When compressed air is supplied to a first inlet 54a of the first cylinder 54, the first shaft support body 53 is moved downward, and when the compressed air is supplied to a first inlet 56a of the second cylinder 56, the second shaft support body 55 is moved downward, and thus the guide roll 51 is moved downward, and its circumferential surface can be brought into pressure contact with the circumferential surface of the lamination pull roll 50.

In addition, when the compressed air is supplied to a second inlet 54b of the first cylinder 54, the first shaft support body 53 is moved upward, and when the compressed air is supplied to a second inlet 56b of the second cylinder 56, the second shaft support body 55 is moved upward, and thus the guide roll 51 can be moved upward, and its circumferential surface can be separated from the circumferential surface of the lamination pull roll 50.

Furthermore, a pressing force of the guide roll 51 to the lamination pull roll 50 is determined by an air pressure of the compressed air supplied to the first inlet 54a of the first cylinder 54 and the first inlet 56a of the second cylinder 56, and necessary pressure adjustment can be made by its air pressure setting.

Non-adhesiveness of the guide roll 51 has enhanced by a cylinder 51b made of silicon rubber with excellent abrasion resistance a roll body 51a.

As a result, sticking to the guide roll 51 side of an adhesive protruding from an outer peripheral portion of the label 13 can be prevented.

Since the drive of the lamination pull roll 50 can be controlled alone by the lamination pull roll driving portion 52, the rotating speed of the lamination pull roll 50 can be controlled separately from the rotating speed of the feeding pull roll 21 of the paper feeding portion 2.

As a result, the the amount of overlap between the preceding label 13 and the subsequent label 13 can be arbitrarily changed by controlling the conveying speed of the label 13 by the lamination device 5 separately from the conveying speed of the release paper 12 by the paper feeding portion 2 and thus controlling the speed ratio of the conveying speeds between the both.

Each of the conveying speed of the release paper 12 by the paper feeding portion 2 and the conveying speed (winding speed) of the release paper 12 by the winding portion 4 can be controlled alone.

For example, the feeding pull roll 21 can be drivingly controlled alone, and the winding pull roll 41 can be drivingly controlled alone.

As a result, a tension of the release paper 12 can be arbitrarily set when the release paper 12 is conveyed.

The feeding pull roll 21 is attached to the device body 1a as follows.

The device body 1a includes a feeding-side auxiliary frame 1d for mounting the feeding pull roll 21 as illustrated in Fig. 1. The feeding-side auxiliary frame 1d is oppoded to the surface of the frame 1b spaced therefrom. Furthermore, the feeding-side auxiliary frame 1d is supported by the frame 1b by using a connecting member (stay), not shown.

One end portion of the feeding pull roll 21 in the axial direction is rotatably supported by the frame 1b. The other end portion of the feeding pull roll 21 in the axial direction is rotatably supported by the feeding-side auxiliary frame 1d. That is, the feeding pull roll 21 is rotatably supported by the frame 1b and the feeding-side auxiliary frame 1d, and has a both-side supporting structure.

A feeding pull roll driving portion is attached to the back of the frame 1b. This feeding pull roll driving portion rotationally drives the feeding pull roll 21.

The winding pull roll 41 is attached to the device body 1a as follows.

As illustrated in Fig. 1, the device body 1a includes a winding side auxiliary frame 1e for mounting the winding pull roll. The winding side auxiliary frame 1e is opposed to the surface of the frame 1b spaced therefrom. Furthermore, the winding side auxiliary frame 1e is supported by the frame 1b by using a connecting member (stay), not shown.

One end portion of the winding pull roll 41 in the axial direction is rotatably supported by the frame 1b. The other end portion of the winding pull roll 41 in the axial direction is rotatably supported by the winding side auxiliary frame 1e. That is, the winding pull roll 41 is rotatably supported by the frame 1b and the winding side auxiliary frame 1e, and has a both-side supporting structure.

A winding pull roll driving portion is attached to the back of the frame 1b. This winding pull roll driving portion rotationally drives the winding pull roll 41.

Then, the conveying speed of the release paper 12 by the paper feeding portion 2 and the conveying speed of the release paper 12 by the winding portion 4 can be controlled alone, by separately controlling the feeding pull roll driving portion and the winding pull roll driving portion.

As illustrated in Fig. 1, a feeding-side guide roll 22 is provided on the downstream side of the feeding pull roll 21.

The release paper 12 conveyed from the paper feeding portion 2 is conveyed to the tip end portion 30a of the peeling plate 30 via the feeding pull roll 21 and through the feeding-side guide roll 22.

Then, the feeding-side guide roll 22 has its one end portion in the axial direction attached to the frame 1b of the device body 1a, so as to be capable of changing its position in the vertical direction. That is, the feeding-side guide roll 22 is supported only by the frame 1b, and has a cantilever structure.

For example, the position in the vertical direction is changed by fitting the feeding-side guide roll 22 to any one of a plurality of mounting holes in the frame 1b at an interval in the vertical direction.

As illustrated in Fig. 1, the winding side guide roll 43 is provided on the upstream side of the winding pull roll 41.

The release paper 12 is wound by the winding shaft 40 (paper tube 42) from the tip end portion 30a of the peeling plate 30 via the winding side guide roll 43 and through the winding pull roll 41.

The winding side guide roll 43 has its one end portion in the axial direction attached to the frame 1b of the device body 1a, so as to be capable of changing the position in the back and forth direction. That is, the winding side guide roll 43 is supported only by the frame 1b, and has a cantilever structure.

For example, mounting screw holes are formed in the frame 1b at an interval in the back and forth direction, and a bolt is screwed in any of the mounting screw holes, and thus mounting position can be changed.

Bending angle of the release paper 12 when being folded back at and passing through the tip end portion 30a of the peeling plate 30 can be changed by changing the position of the feeding-side guide roll 22 in the vertical direction and by changing the position of the winding side guide roll 43 in the back and forth direction.

As illustrated in Fig. 1, a controller (Edge Position Control device) 7 for automatically performing operation to keep a lug end of the release paper 12 at a constant position is provided on the upstream side of the feeding pull roll 21 (that is, between the feeding shaft 20 and the feeding pull roll 21) and on the downstream side of the winding pull roll 41 (that is, between the winding pull roll 41 and the winding shaft 40), respectively.

The lug end of the release paper 12 is described here as a side edge continuing in the conveying direction of the release paper 12.

Owing to the controllers 7 , the release paper 12 can be conveyed from the feeding shaft 20 to the winding shaft 40 without meandering, and the release paper 12 from which the label 13 has been peeled off can be wound by the winding shaft 40 (paper tube 42) with the lug end aligned.

Thus, the release paper 12 wound by the winding shaft 40 can be removed from the winding shaft 40 and can be re-used in another machine.

In Fig. 1, since the release paper 12 is wound by the paper tube 42, the paper can be removed from the winding shaft 40 together with the paper tube 42. Then, the paper tube 42 is attached to a shaft of another machine, and thus the wound release paper 12 can be set on another machine and re-used, and a work of re-use can be facilitated.

Each of the controller 7 includes a bracket 71 having a pair of rolls 70, a rocking source 72 for rocking the bracket 71, and a sensor 73 for detecting displacement of the lug end of the release paper 12. The rocking source 72 and the sensor 73 are attached to the feeding-side auxiliary frame 1d and the winding side auxiliary frame 1e.

That is, each of the controller 7 is attached to the feeding-side auxiliary frame 1d and the winding side auxiliary frame 1e, respectively.

The controller 7 operates as follows.

The pair of rolls 70 faces the direction orthogonal to the conveying direction of the release paper 12 and are mounted on the bracket 71 at an interval in the conveying direction. The bracket 71 is rocked at an intermediate point of the pair of rolls 70 in the conveying direction as a fulcrum.

As far as the release paper 12 is conveyed correctly and linearly without meandering, the pair of rolls 70 are orthogonal to the conveying direction of the release paper 12. At this time, the lug end of the release paper 12 passing through the sensor 73 is at a predetermined position, and the sensor 73 does not detect displacement of the lug end.

When the release paper 12 meanders, the lug end of the release paper 12 passing through the sensor 73 is displaced from the predetermined position, and the sensor 73 detects displacement of the lug end and outputs a instruction to drive the rocking source 72.

The rocking source 72 rocks the bracket 71, whereby the pair of rolls 70 is be disposed diagonal relative to a direction orthogonal to the conveying direction of the release paper 12, and thus the release paper 12 is displaced to the direction orthogonal to the conveying direction, and meandering is modified.

When the meandering of the release paper 12 is modified, the lug end of the release paper 12 passing through the sensor 73 is positioned at a predetermined position, and the sensor 73 no longer detects displacement of the lug end. The rocking source 72 rocks the bracket 71 to the original position, and the pair of rolls 70 become to be orthogonal to the conveying direction of the release paper 12.

Accordingly, the lug end of the release paper 12 can be kept at a constant position at all times by providing the controller 7. That is, meandering of the release paper 12 can be prevented.

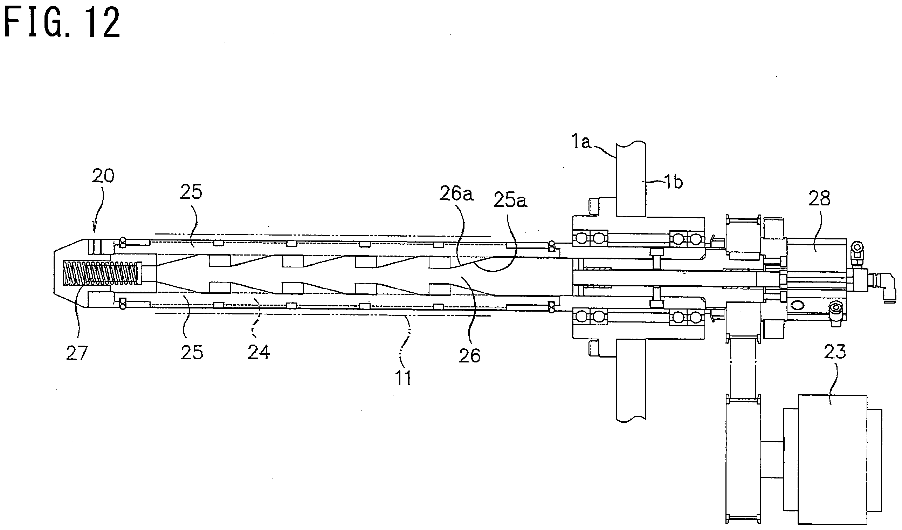

As illustrated in Figs. 1 and 12, the one end portion of the feeding shaft 20 of the paper feeding portion 2 in the axial direction is rotatably supported by the frame 1b of the device body 1a, and the other end portion of the feeding shaft 20 in the axial direction is in a free state. That is, the feeding shaft 20 is attached to the device body 1a in a cantilever structure.

Therefore, the label paper 10 wound in a roll shape can be easily attached from the other end portion of the feeding shaft 20 in the axial direction in a short time.

In the present embodiment, the label paper 10 is wound around the paper tube 11 in a roll shape, and the paper tube 11 is attached to the feeding shaft 20 by insertion of the paper tube 11 from the other end portion in the axial direction, and thus the label paper 10 wound in a roll shape can be easily attached to the feeding shaft 20 in a shorter time.

In this case, the feed-completed paper tube 11 is removed from the feeding shaft 20, and then the paper tube 11 around which the label paper 10 is wound is attached to the feeding shaft 20.

As illustrated in Fig. 12, the one end portion of the feeding shaft 20 in the axial direction is connected to a powder brake 23 provided on the back of the frame 1b. As a result, a set value of rotation resistance in the powder brake 23 is applied to the feeding shaft 20.

The feeding shaft 20 includes a cylinder body 24, a plurality of paper-tube support pieces 25 movably provided in the radial direction on the cylinder body 24, and a slide shaft 26 movably provided in the axial direction in the cylinder body 24.

The slide shaft 26 has a plurality of tapered surfaces 26a at an interval in the axial direction. Each of wedge surfaces 25a of the paper-tube support piece 25 is in contact with each of the tapered surfaces 26a.

Then, the slide shaft 26 is moved and held by a spring 27 in a direction in which the tapered surface 26a is separated away from the wedge surface 25a, and allows insertion and extraction of the paper tube 11 with each of the paper-tube support pieces 25 positioned on an inner side.

The slide shaft 26 contracts the spring 27 by extending a cylinder 28 and is moved in a direction in which the tapered surface 26a presses the wedge surface 25a, and holds the paper tube 11 with each of the paper-tube support pieces 25 positioned on an outer side in the radial direction.

Accordingly, the paper tube 11 can be easily inserted into or extracted from the feeding shaft 20 by contracting the cylinder 28.

The paper tube 11 can be held by the feeding shaft 20 by extending the cylinder 28, and the feeding shaft 20 and the paper tube 11 are integrally rotated.

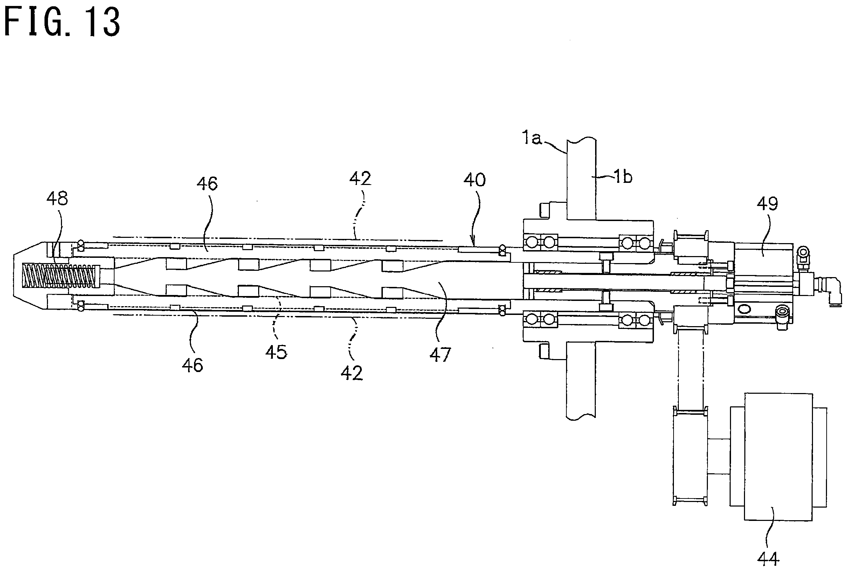

As illustrated in Figs. 1 and 13, the one end portion of the winding shaft 40 of the winding portion 4 in the axial direction is rotatably supported by the frame 1b of the device body 1a, and the other end portion of the winding shaft 40 in the axial direction is in a free state. That is, the winding shaft 40 is attached to the device body 1a in a cantilever structure.

Accordingly, the release paper 12 wound by the winding shaft 40 in a roll shape can be easily removed from the other end portion in the axial direction in a short time.

In the present embodiment, since the release paper 12 is wound by the paper tube 42 attached to the winding shaft 40, the wound release paper 12 is removed from the winding shaft 40 together with the paper tube 42 and can be easily removed in a shorter time.

In this case, the wound release paper 12 is removed together with the paper tube 42, and then the new paper tube 42 is attached to the winding shaft 40.

As illustrated in Fig. 13, the one end portion of the winding shaft 40 in the axial direction is connected to the winding shaft driving portion (motor), not shown, via a powder clutch 44 provided on the back of the frame 1b. As a result, the winding shaft 40 is driven alone, and at this time, a control value of the powder clutch 44 is preliminarily set on an operation panel, not shown, and the winding shaft 40 is controlled on the basis of the set value. With such a configuration, the winding shaft 40 stops rotating when a tension of the release paper 12 generated by the winding exceeds the set value of the powder clutch 44, and thus, a winding torque of the release paper 12 is maintained at the set value.

The winding shaft 40 includes a cylinder body 45, a plurality of paper-tube support pieces 46, a slide shaft 47, a spring 48, and a cylinder 49, similarly to the feeding shaft 20.

Therefore, the paper tube 42 can be easily inserted into or extracted from the winding shaft 40, and the paper tube 42 can be supported by the winding shaft 40 and can be integrally rotated.

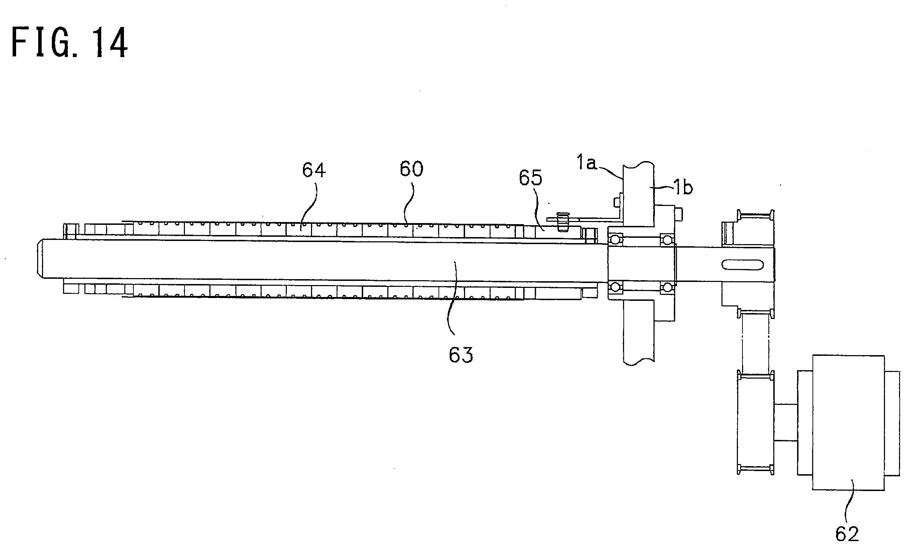

As illustrated in Figs. 1 and 14, the one end portion of the product winding shaft 60 of the product winding portion 6 in the axial direction is rotatably supported by the frame 1b of the device body 1a, and the other end portion of the product winding shaft 60 in the axial direction is in a free state.

That is, the product winding shaft 60 is attached to the device body 1a in a cantilever structure.

Accordingly, the laminated label body 14 wound by the product winding shaft 60 in a roll shape can be easily removed from the other end portion of the product winding shaft 60 in the axial direction in a short time.

In the embodiment, since the laminated label body 14 is wound by the paper tube 61 attached to the product winding shaft 60, the wound laminated label body 14 is removed from the product winding shaft 60 together with the paper tube 61 and thus can be easily removed in a shorter time.

In this case, the wound laminated label body 14 is removed together with the paper tube 61, and then the new paper tube 61 is attached to the product winding shaft 60.

As illustrated in Fig. 14, the one end portion of the product winding shaft 60 in the axial direction is connected to the product winding shaft driving portion (motor), not shown, via a powder clutch 62 provided on the back of the frame 1b. As a result, the product winding shaft 60 is driven and controlled alone. At this time, a control value of the powder clutch 62 is preliminarily set on the operation pane, not shown, and the product winding shaft 60 is controlled on the basis of the set value. With such a configuration, the product winding shaft 60 stops rotating when a tension of the laminated label body 14 generated by the winding exceeds the set value of the powder clutch 62 and thus, a winding torque of the laminated label body 14 is maintained at the set value.

The product winding shaft 60 is a friction shaft including a driving shaft 63, a plurality of rings 64 provided on an outer circumference of the driving shaft 63, and a cylinder 65 for press-fit end surfaces of the rings 64 in the axial direction with each other via an oil washer. Rotation resistance of the ring 64 can be adjusted by adjusting a pressure contact force by the cylinder 65 by a regulator, not shown.

The driving shaft 63 is connected to the product winding shaft driving portion through the powder clutch 62. The paper tube 61 is attached to the ring 64.

Each of the rings 64 is rotated and winds the laminated label body 14, by rotationally driving the driving shaft 63. When a tension of the laminated label body 14 generated by the winding exceeds a set value, the ring 64 stops rotating.

As a result, the winding torque of the laminated label body 14 is maintained at the set value, and the laminated label bodies 14 in a plurality of rows can be simultaneously wound.

That is, when the plurality of laminated label bodies 14 conveyed from the lamination device 5 is to be wound, if there exist any laminated label body 14 whose tension exceeds the set value, the ring 64 for winding up the laminated label body 14 no longer rotates. When the laminated label body 14 is further conveyed from the lamination device 5 in this state, the tension becomes weak, and thus the ring 64 rotates and winds up the laminated label body 14.

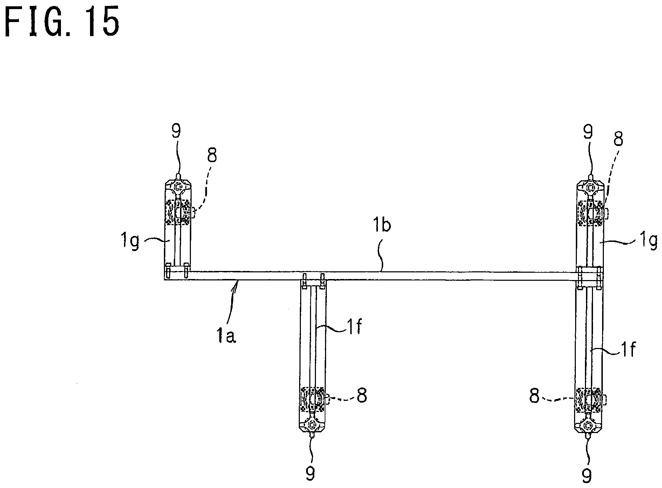

The device body 1a includes a pair of front-surface side brackets 1f and a pair of back-surface side brackets 1g on a lower end portion of the frame 1b as illustrated in Figs. 1, 15 and 16.

A width of the pair of front-surface side brackets 1f is smaller than a width of the frame 1b, and the pair of front-surface side brackets are horizontally fixed to a portion closer to both ends of the frame 1b in the width direction by a bolt or the like so as to be orthogonal to the frame 1b.

A width of the pair of back-surface side brackets 1g is smaller than a width of the frame 1b, and the pair of back-surface side brackets are horizontally fixed to a portion closer to both ends of the frame 1b in the width direction by a bolt or the like so as to be orthogonal to the frame 1b.

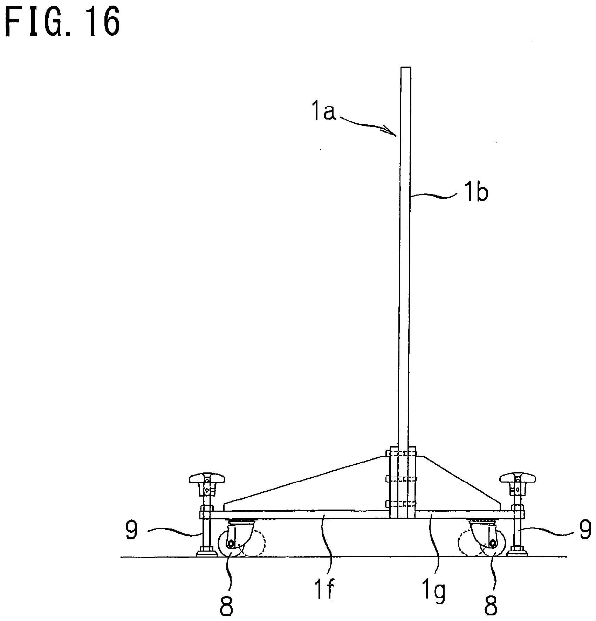

That is, the device body 1a is configured such that the frame 1b, the pair of front-surface side brackets 1f and the pair of back-surface side brackets 1g form a substantially inverted T-shape when viewed from a side surface as illustrated in Fig. 16.

A caster 8 and a level adjuster 9 are attached to the pair of front-surface side brackets 1f and the pair of back-surface side brackets 1g, respectively.

Therefore, the device body 1a can move freely to any installation place by the caster 8.

That is, the manufacturing device 1 of the laminated label body of the present invention has space-saving specification and is small-sized and light-weighted, and thus the device can freely move to any installation place by the caster 8 attached to the device body 1a.

## Claims

1. A manufacturing device of a laminated label body comprising:
a paper feeding portion (2) for conveying a release paper (12) to which a label (13) is stuck at a first conveying speed;
a winding portion (4) for winding the release paper (12) conveyed at said first conveying speed;
a peeling device (3) for peeling off the label (13) from the release paper (12) conveyed at said first conveying speed; and
a lamination device (5) for conveying the label (13) peeled off from the release paper (12) conveyed at said first conveying speed at a second conveying speed, for manufacturing a laminated label body (14) with a preceding label (13) and a subsequent label (13) being laminated with each other by overlapping and adhering them, and for conveying said laminated label body (14), wherein the second conveying speed is slower than said first conveying speed, so that a rear end portion of the preceding label (13) and a tip end of the subsequent label (13)are adhered to each other in an overlapped state to be laminated, **characterised in that**
the lamination device (5) includes a lamination pull roll (50) rotationally driven and a guide roll (51) rotatably pressed against the lamination pull roll (50), a circumferential surface of said lamination pull roll (50) is constructed to prevent adhesion of said label (13) peeled off by said peeling device (3), and a tip end portion of said label (13) peeled off in said peeling device (3) is fed into an area for applying rotational pressure between said lamination pull roll (50) and said guide roll (51) while being in contact with the circumferential surface of said guide roll (51).

2. The manufacturing device of a laminated label body according to claim 1, wherein
the peeling device (3) includes a peeling plate (30) provided between said paper feeding portion (2) and said winding portion (4); and
the release paper (12) is folded back at a sharp angle around a tip end portion (30a) of said peeling plate (30) in order to peel off the label (13) when passing through the tip end portion (30a) of said peeling plate (30).

3. The manufacturing device of a laminated label body according to claim 2, wherein
the peeling device (3) includes: a vertical position adjustment mechanism (31) for changing a position of the peeling plate (30) in a vertical direction with respect to an area for applying rotational pressure between the lamination pull roll (50) and the guide roll (51) of the lamination device (5); a back and forth position adjustment mechanism (32) for changing the position of said peeling plate (30) in a back and forth direction with respect to the area for applying rotational pressure; and an angle adjustment mechanism (33) for changing an insertion angle of the peeling plate (30) between the lamination pull roll (50) and the guide roll (51).

4. The manufacturing device of a laminated label body according to claim 3, wherein
the vertical position adjustment mechanism (31) is attached to the device body (1a) in a cantilever structure;
the back and forth position adjustment mechanism is attached to a vertically moving portion of said vertical position adjustment mechanism (31); and
the peeling plate (30) is attached to a portion moving in the back and forth direction of the back and forth position adjustment mechanism via said angle adjustment mechanism (33) .

5. The manufacturing device of a laminated label body according to claim 1, wherein
the first conveying speed of the release paper by said paper feeding portion (2) and the winding portion (4) and the second conveying speed of the label (13) by said lamination device (5) are configured to be capable of being controlled alone, respectively, and a speed ratio of the first conveying speed of said release paper (12) and the second conveying speed of said label (13) is configured being arbitrarily set.

6. The manufacturing device of a laminated label body according to any one of claims 1 to 5, further comprising
a product winding portion (6) for winding the laminated label body (14) conveyed from the lamination device (5) in a roll shape on a downstream side of the lamination device (5).

7. The manufacturing device of a laminated label body according to claim 6, wherein
the lamination device (5) conveys a plurality of the laminated label bodies (14) in a row adjacently in a direction orthogonal to the conveying direction; and
a plurality of the product winding portions (6) is provided on the downstream side of the lamination device (5), and a plurality of the laminated label bodies (14) is separately wound by each of different product winding portions (6).

8. The manufacturing device of a laminated label body according to claim 6 or 7, wherein
the paper feeding portion (2) has a feeding shaft (20) for attaching the release paper (12) wound in a roll shape to which labels (13) are stuck;
the winding portion (4) has a winding shaft (40) for winding the release paper (12) in a roll shape; and
the product winding portion (6) has a product winding shaft for winding the laminated label body (14) in a roll shape; and
the feeding shaft (20), the winding shaft (40), and the product winding shaft (60) are attached to the device body (1a) in the cantilever structure.

## Patentansprüche

1. Vorrichtung zum Herstellen eines laminierten Etikettkörpers, umfassend:
einen Papierzufuhrabschnitt (2) zum Befördern eines Trennpapiers (12), an das ein Etikett (13) geklebt ist, mit einer ersten Fördergeschwindigkeit;
einen Wickelabschnitt (4) zum Wickeln des mit der ersten Fördergeschwindigkeit beförderten Trennpapiers (12);
eine Ablösevorrichtung (3) zum Ablösen des Etiketts (13) von dem mit der ersten Fördergeschwindigkeit beförderten Trennpapier (12); und
eine Laminiervorrichtung (5) zum Befördern des von dem mit der ersten Fördergeschwindigkeit beförderten Trennpapier (12) abgelösten Etiketts (13) mit einer zweiten Fördergeschwindigkeit zum Herstellen eines laminierten Etikettkörpers (14) mit einem vorausgehenden Etikett (13) und einem nachfolgenden Etikett (13), die durch Überlappen und Aneinanderkleben miteinander laminiert werden, und zum Befördern des laminierten Etikettkörpers (14), wobei die zweite Fördergeschwindigkeit langsamer als die erste Fördergeschwindigkeit ist, so dass ein hinterer Endabschnitt des vorausgehenden Etiketts (13) und ein vorderes Ende des nachfolgenden Etiketts (13) in einem Überlappungszustand aneinander geklebt werden, um laminiert zu werden.
**dadurch gekennzeichnet, dass**
die Laminiervorrichtung (5) eine Laminierzugwalze (50), die drehend angetrieben wird, und eine Führungswalze (51) umfasst, die drehend gegen die Laminierzugwalze (50) gepresst wird, wobei eine Umfangsfläche der Laminierzugwalze (50) so ausgebildet ist, dass sie Anhaften des durch die Ablösevorrichtung (3) abgelösten Etiketts (13) verhindert und ein vorderer Endabschnitt des in der Ablösevorrichtung (3) abgelösten Etiketts (13) in einen Bereich zum Anwenden von Rotationsdruck zwischen der Laminierzugwalze (50) und der Führungswalze (51) eingeführt wird, während er mit der Umfangsfläche der Führungswalze (51) in Kontakt ist.

2. Vorrichtung zum Herstellen eines laminierten Etikettkörpers nach Anspruch 1, wobei
die Ablösevorrichtung (3) eine Ablöseplatte (30) umfasst, die zwischen dem Papierzufuhrabschnitt (2) und dem Wickelabschnitt (4) vorgesehen ist; und
das Trennpapier (12) in einem spitzen Winkel um einen vorderen Endabschnitt (30a) der Ablöseplatte (30) zurückgefaltet wird, um das Etikett (13) abzulösen, wenn es durch den vorderen Endabschnitt (30a) der Ablöseplatte (30) durchtritt.

3. Vorrichtung zum Herstellen eines laminierten Etikettkörpers nach Anspruch 2, wobei
die Ablösevorrichtung (3) umfasst: einen Vertikalpositionseinstellmechanismus (31) zum Ändern einer Position der Ablöseplatte (30) in einer vertikalen Richtung in Bezug auf einen Bereich zum Anwenden von Rotationsdruck zwischen der Laminierzugwalze (50) und der Führungswalze (51) der Laminiervorrichtung (5); einen Vorwärts- und Rückwärtspositionseinstellmechanismus (32) zum Ändern der Position der Ablöseplatte (30) in einer Vorwärts- und Rückwärtsrichtung in Bezug auf den Bereich zum Anwenden von Rotationsdruck; und einen Winkeleinstellmechanismus (33) zum Ändern eines Einführwinkels der Ablöseplatte (30) zwischen der Laminierzugwalze (50) und der Führungswalze (51).

4. Vorrichtung zum Herstellen eines laminierten Etikettkörpers nach Anspruch 3, wobei
der Vertikalpositionseinstellmechanismus (31) am Vorrichtungskörper (1a) in einer Auslegerstruktur angebracht ist;
der Vorwärts- und Rückwärtspositionseinstellmechanismus an einem sich vertikal bewegenden Abschnitt des Vertikalpositionseinstellmechanismus (31) angebracht ist; und
die Ablöseplatte (30) an einem Abschnitt angebracht ist, der sich über den Winkeleinstellmechanismus (33) in der Vorwärts- und Rückwärtsrichtung des Vorwärts- und Rückwärtspositionseinstellmechanismus bewegt.

5. Vorrichtung zum Herstellen eines laminierten Etikettkörpers nach Anspruch 1, wobei
die erste Fördergeschwindigkeit des Trennpapiers durch den Papierzufuhrabschnitt (2) und den Wickelabschnitt (4) und die zweite Fördergeschwindigkeit des Etiketts (13) durch die Laminiervorrichtung (5) so ausgelegt sind, dass sie jeweils allein gesteuert werden können, und ein Geschwindigkeitsverhältnis der ersten Fördergeschwindigkeit des Trennpapiers (12) und der zweiten Fördergeschwindigkeit des Etiketts (13) so ausgelegt ist, dass es beliebig festgelegt wird.

6. Vorrichtung zum Herstellen eines laminierten Etikettkörpers nach einem der Ansprüche 1 bis 5, ferner umfassend:
einen Produktwickelabschnitt (6) zum Wickeln des von der Laminiervorrichtung (5) beförderten laminierten Etikettkörpers (14) in einer Rollenform auf einer stromabwärts gelegenen Seite der Laminiervorrichtung (5).

7. Vorrichtung zum Herstellen eines laminierten Etikettkörpers nach Anspruch 6, wobei
die Laminiervorrichtung (5) eine Mehrzahl von laminierten Etikettkörpern (14) in einer Reihe benachbart in einer Richtung orthogonal zur Förderrichtung befördert; und
eine Mehrzahl von Produktwickelabschnitten (6) auf der stromabwärts gelegenen Seite der Laminiervorrichtung (5) vorgesehen ist, und eine Mehrzahl der laminierten Etikettkörper (14) durch jede der verschiedenen Produktwickelabschnitte (6) separat gewickelt wird.

8. Vorrichtung zum Herstellen eines laminierten Etikettkörpers nach Anspruch 6 oder 7, wobei
der Papierzufuhrabschnitt (2) eine Zufuhrwelle (20) zum Anbringen des in einer Rollenform gewickelten Trennpapiers (12) umfasst, an das die Etikette (13) geklebt ist;
der Wickelabschnitt (4) eine Wickelwelle (40) zum Wickeln des Trennpapiers (12) in einer Rollenform aufweist; und
der Produktwickelabschnitt (6) eine Produktwickelwelle zum Wickeln des laminierten Etikettkörpers (14) in einer Rollenform aufweist; und
die Zufuhrwelle (20), die Wickelwelle (40) und die Produktwickelwelle (60) am Vorrichtungskörper (1a) in der Auslegerstruktur angebracht sind.

## Revendications

1. Dispositif de fabrication d'un corps d'étiquette stratifié comprenant :
une portion d'alimentation en papier (2) pour acheminer un papier antiadhésif (12) auquel est collée une étiquette (13) à une première vitesse d'acheminement ;
une portion d'enroulement (4) pour enrouler le papier antiadhésif (12) acheminé à ladite première vitesse d'acheminement ;
un dispositif de séparation (3) pour séparer l'étiquette (13) du papier antiadhésif (12) acheminé à ladite première vitesse d'acheminement ; et
un dispositif de stratification (5) pour acheminer l'étiquette (13) séparée du papier antiadhésif (12) acheminé à ladite première vitesse d'acheminement à une deuxième vitesse d'acheminement, pour fabriquer un corps d'étiquette stratifié (14) avec une étiquette précédente (13) et une étiquette suivante (13) étant stratifiées l'une avec l'autre par chevauchement et collage entre elles, et pour acheminer ledit corps d'étiquette stratifié (14), dans lequel la deuxième vitesse d'acheminement est plus lente que ladite première vitesse d'acheminement, de sorte qu'une portion d'extrémité arrière de l'étiquette précédente (13) et une extrémité à pointe de l'étiquette suivante (13) sont collées l'une à l'autre dans un état chevauché pour être stratifiées, **caractérisé en ce que**
le dispositif de stratification (5) comprend un rouleau de traction de stratification (50) entraîné d'une manière rotative et un rouleau de guidage (51) pressé d'une manière rotative contre le rouleau de traction de stratification (50), une surface circonférentielle dudit rouleau de traction de stratification (50) est construite pour empêcher le collage de ladite étiquette (13) séparée par ledit dispositif de séparation (3), et une portion d'extrémité à pointe de ladite étiquette (13) séparée dans ledit dispositif de séparation (3) est avancée dans une zone d'application de pression rotative entre ledit rouleau de traction de stratification (50) et ledit rouleau de guidage (51) tout en étant en contact avec la surface circonférentielle dudit rouleau de guidage (51).

2. Dispositif de fabrication d'un corps d'étiquette stratifié selon la revendication 1, dans lequel
le dispositif de séparation (3) comprend une plaque de séparation (30) prévue entre ladite portion d'alimentation en papier (2) et ladite portion d'enroulement (4) ; et
le papier antiadhésif (12) est replié à angle aigu autour d'une portion d'extrémité à pointe (30a) de ladite plaque de séparation (30) afin de séparer l'étiquette (13) lors du passage à travers la portion d'extrémité à pointe (30a) de ladite plaque de séparation (30).

3. Dispositif de fabrication d'un corps d'étiquette stratifié selon la revendication 2, dans lequel
le dispositif de séparation (3) comprend : un mécanisme d'ajustement de position verticale (31) pour modifier une position de la plaque de séparation (30) dans un sens vertical par rapport à une zone d'application de pression rotative entre le rouleau de traction de stratification (50) et le rouleau de guidage (51) du dispositif de stratification (5) ; un mécanisme d'ajustement de position arrière et avant (32) pour modifier la position de ladite plaque de séparation (30) dans un sens arrière et avant par rapport à la zone d'application de pression rotative ; et un mécanisme d'ajustement d'angle (33) pour modifier un angle d'insertion de la plaque de séparation (30) entre le rouleau de traction de séparation (50) et le rouleau de guidage (51).

4. Dispositif de fabrication d'un corps d'étiquette stratifié selon la revendication 3, dans lequel
le mécanisme d'ajustement de position verticale (31) est fixé au corps du dispositif (1a) dans une structure en porte à faux ;
le mécanisme d'ajustement de position arrière et avant est fixé à une portion de déplacement vertical dudit mécanisme d'ajustement de position verticale (31) ; et
la plaque de séparation (30) est fixée à une portion se déplaçant dans le sens arrière et avant du mécanisme d'ajustement de position arrière et avant par l'intermédiaire dudit mécanisme d'ajustement d'angle (33).

5. Dispositif de fabrication d'un corps d'étiquette stratifié selon la revendication 1, dans lequel
la première vitesse d'acheminement du papier antiadhésif par ladite portion d'alimentation en papier (2) et la portion d'enroulement (4) et la deuxième vitesse d'acheminement de l'étiquette (13) par ledit dispositif de stratification (5) sont configurées pour pouvoir être commandées seules, respectivement, et un rapport de vitesse de la première vitesse d'acheminement dudit papier antiadhésif (12) et de la deuxième vitesse d'acheminement de ladite étiquette (13) est configuré en étant établi arbitrairement.

6. Dispositif de fabrication d'un corps d'étiquette stratifié selon l'une quelconque des revendications 1 à 5, comprenant en outre
une portion d'enroulement du produit (6) pour enrouler le corps d'étiquette stratifié (14) acheminé depuis le dispositif de stratification (5) en forme de rouleau sur un côté aval dudit dispositif de stratification (5).

7. Dispositif de fabrication d'un corps d'étiquette stratifié selon la revendication 6, dans lequel
le dispositif de stratification (5) achemine une pluralité de corps d'étiquette stratifiés (14) à la suite d'une manière adjacente dans un sens orthogonal au sens d'acheminement ; et
une pluralité de portions d'enroulement du produit (6) est prévue sur le côté aval du dispositif de stratification (5), et une pluralité de corps d'étiquette stratifiés (14) est enroulée séparément par chacune des différentes portions d'enroulement du produit (6).

8. Dispositif de fabrication d'un corps d'étiquette stratifié selon la revendication 6 ou 7, dans lequel
la portion d'alimentation en papier (2) a un arbre d'alimentation (20) pour fixer le papier antiadhésif (12) enroulé en forme de rouleau auquel sont collées les étiquettes (13) ;
la portion d'enroulement (4) a un arbre d'enroulement (40) pour enrouler le papier antiadhésif (12) en forme de rouleau ; et
la portion d'enroulement du produit (6) a un arbre d'enroulement du produit pour enrouler le corps d'étiquette stratifié (14) en forme de rouleau ; et
l'arbre d'alimentation (20), l'arbre d'enroulement (40), et l'arbre d'enroulement du produit (60) sont fixés au corps du dispositif (1a) dans la structure en porte à faux.
